(19)

Europäisches
Patentamt
European
Patent Office
Office européen
des brevets

(11) **EP 2 551 826 A2**

(12) **EUROPEAN PATENT APPLICATION**

(43) Date of publication:
**30.01.2013 Bulletin 2013/05**

(51) Int Cl.:
***G06T 15/00*** *(2011.01)*

(21) Application number: **12178304.7**

(22) Date of filing: **27.07.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.07.2011 JP 2011166822**

(71) Applicant: **FUJITSU LIMITED
Kawasaki-shi,
Kanagawa 211-8588 (JP)**

(72) Inventor: **Sugama, Yasushi
Kawasaki-shi, Kanagawa 211-8588 (JP)**

(74) Representative: **Tsang, Olivia
Haseltine Lake LLP
300 High Holborn
London WC1V 7JH (GB)**

(54) **Drawing device**

(57)     A drawing device includes a coordinate transformation unit receiving vertex information of a graphic and generating graphic information including at least positional information indicative of coordinates on a two-dimensional display surface of the graphic based on the vertex information; a selection unit receiving the graphic information from the coordinate transformation unit, calculating a drawing range in a predetermined direction of the graphic based on the graphic information, and outputting the graphic information of the graphic to be drawn in divided areas for each of the divided areas obtained by dividing the two-dimensional display surface; an image generating unit generating image data of the divided areas based on the graphic information output from the selection unit; and a line buffer storing the image data generated by the image generating unit.

FIG. 1

**Description**

FIELD

The present embodiments relate to a drawing device.

BACKGROUND

A drawing device that draws a three-dimensional image etc. generates graphic information on a two-dimensional display surface based on, for example, vertex information of a graphic. Related arts are discussed in Japanese Laid-open Patent Publication No. 11-31236, Japanese Laid-open Patent Publication No. 10-222695, Japanese Laid-open Patent Publication No. 09-180000, and Japanese Laid-open Patent Publication No. 2000-30081. The drawing device generates an image to be displayed on the two-dimensional display surface based on the generated graphic information. For example, the drawing device has a frame buffer storing the color of a pixel and a depth buffer storing the depth (Z value) of a pixel.

In a general drawing device, the frame buffer and the depth buffer require a memory size for the number of pixels of the display surface. For example, when the display surface includes 800 x 600 pixels and the data size (sum of color and depth) for one pixel is 8 bytes, the frame buffer and the depth buffer require a memory size of about 3.7 MB in total.

In order to store data corresponding to the number of pixels of the display surface, a buffer (frame buffer and depth buffer) having a large memory size is required. For example, when a frame buffer etc. having a large memory size is formed by an SRAM within the drawing device, the circuit area and cost increase considerably. Furthermore, when a frame buffer etc. having a large memory size is formed by a DRAM outside the drawing device, there are such problems that power consumption increases due to input and output of data to and from the external DRAM and that the cost increases because the DRAM is mounted as another chip.

SUMMARY

It is a proposition of the present application to reduce the memory size of a buffer storing data of pixels. According to one aspect of embodiments, a drawing device includes a coordinate transformation unit receiving vertex information of a graphic and generating graphic information including at least positional information indicative of coordinates on a two-dimensional display surface of the graphic based on the vertex information; a selection unit receiving the graphic information from the coordinate transformation unit, calculating a drawing range in a predetermined direction of the graphic based on the graphic information, and outputting the graphic information of the graphic to be drawn in divided areas for each of the divided areas obtained by dividing the two-dimensional display surface; an image generating unit generating image data of the divided areas based on the graphic information output from the selection unit; and a line buffer storing the image data generated by the image generating unit.

BRIEF DESCRIPTION OF DRAWINGS

FIG. 1 illustrates an example of a drawing device in an embodiment;
FIG. 2 illustrates an example of a drawing device in another embodiment;
FIGs. 3A to 3D illustrate examples of an operation of the drawing device illustrated in FIG. 2;
FIGs. 4A to 4D illustrate examples of the continuation of the operation illustrated in FIGs. 3A to 3D;
FIG. 5 illustrates an example of a drawing device in another embodiment;
FIG. 6 illustrates an example of a drawing device in another embodiment;
FIG. 7 illustrates an example of input and output data of a drawing area determining unit illustrated in FIG. 6; and
FIG. 8 illustrates an example of a drawing device in another embodiment.

DESCRIPTION OF THE EMBODIMENTS

Hereinafter, embodiments will be explained using the drawings.

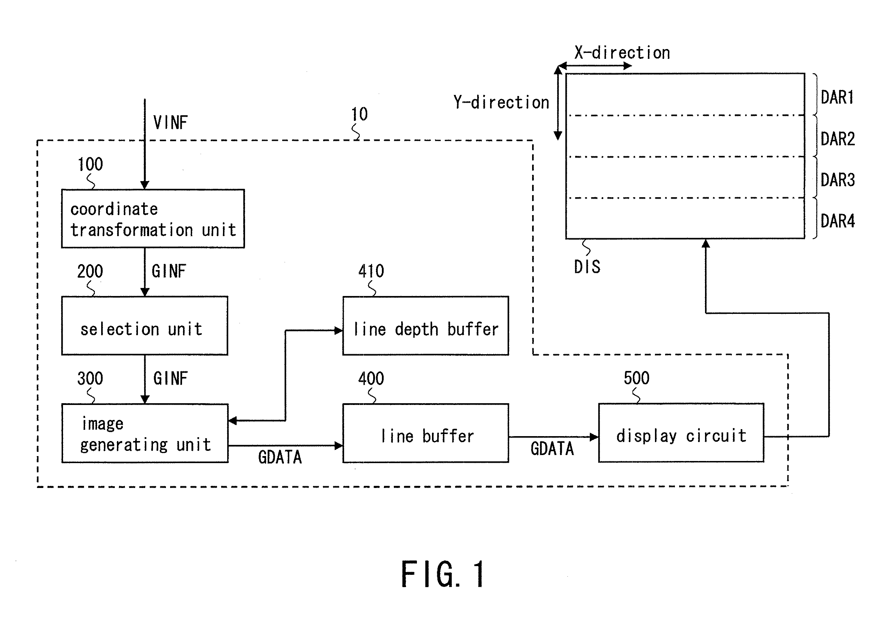

FIG. 1 illustrates an example of a drawing device 10 in an embodiment. The drawing device 10 displays, for example, a three-dimensional image etc. on a two-dimensional display surface DIS. For example, the drawing device 10 generates image data GDATA for each of four divided areas DAR1, DAR2, DAR3, and DAR4, obtained by dividing the two-dimensional display surface DIS in a Y-direction. Divided areas DAR may be areas obtained by dividing the two-dimensional display surface DIS into areas other than the four areas. The drawing device 10 has, for example, a coordinate transformation unit 100, a selection unit 200, an image generating unit 300, a line buffer 400, a line depth buffer 410, and a display circuit 500.

The coordinate transformation unit 100 performs, for example, geometry processing. For example, the coordinate transformation unit 100 receives vertex information VINF of a graphic and generates graphic information GINF of the graphic on the two-dimensional display surface DIS. The graphic is, for example, a triangle. The graphic may be a graphic other than a triangle. In addition, the vertex information VINF is stored, for example, in a memory of a system in which the drawing device 10 is mounted. For example, the vertex information VINF has three-dimensional coordinate information (hereinafter, also referred to as coordinate information) of each vertex of a graphic, color information of each vertex, texture coordinate information, normal vector information, etc. The coordinate information of the vertex information VINF may be, for example, two-dimensional coordinate information.

Furthermore, the graphic information GINF has, for example, coordinate information on the two-dimensional display surface DIS of each vertex of a graphic (hereinafter, also referred to as positional information), equation information of each side of a graphic (equations of the three sides of a triangle), color information, texture coordinate information, normal vector information, Z-direction information (depth information), etc. Meanwhile, each piece of information, such as color information, texture coordinate information, and normal vector information, within the graphic information GINF has, for example, an amount of change in value for an increment in an X-direction, an amount of change in value for an increment in the Y-direction, and an offset value. For example, the color information within the graphic information GINF has an amount of change in color for an increment in the X-direction, an amount of change in color for an increment in the Y-direction, and an offset value.

It may also be possible for the coordinate transformation unit 100 to receive only the coordinate information of a graphic in the vertex information VINF. Then, the coordinate transformation unit 100 performs a part of the geometry processing using the coordinate information and generates the graphic information GINF including vertex numbers of the graphic, positional information of the graphic (coordinates of the graphic on the two-dimensional display surface DIS), and front and back information of the graphic. That is, it may also be possible for the coordinate transformation unit 100 to receive coordinate information of a graphic as the vertex information VINF and to generate the graphic information GINF including at least vertex numbers and positional information of the graphic based on the coordinate information. The vertex numbers of a graphic are, for example, a set of numbers corresponding to the vertexes of the graphic, respectively. For example, for a triangle, vertex numbers of the graphic are a set of numbers corresponding to each of the three vertexes of the triangle.

The selection unit 200 receives the graphic information GINF from the coordinate transformation unit 100 and calculates a drawing range in a predetermined direction (in the example of FIG. 1, in the Y-direction) of a graphic based on the graphic information GINF. Then, the selection unit 200 outputs, for each of the divided areas DAR obtained by dividing the two-dimensional display surface DIS, the graphic information GINF of the graphic to be drawn in the divided area DAR, to the image generating unit 300. Furthermore, the selection unit 200 outputs information indicative of a range in a predetermined direction (in the example of FIG. 1, in the Y-direction) of the divided area DAR, to the image generating unit 300.

Because of this, the image generating unit 300 receives, from the selection unit 200, information indicative of the divided area DAR in which drawing is performed and the graphic information GINF of the graphic to be drawn in the divided area DAR in which drawing is performed. Meanwhile, it may also be possible to receive the information indicative of the divided area DAR in which drawing is performed from a module other than the selection unit 200. For example, it may also be possible for the image generating unit 300 to receive the information indicative of the divided area DAR in which drawing is performed, from a module that controls the drawing device 10.

The image generating unit 300 performs, for example, rendering processing. For example, the image generating unit 300 generates the image data GDATA of the divided area DAR based on the graphic information GINF output from the selection unit 200. That is, the image generating unit 300 generates the image data GDATA for each divided area DAR. In the image data GDATA, for example, pixel color information etc. is included. Meanwhile, it may also be possible for the image generating unit 300 to perform both the geometry processing and the rendering processing.

For example, when the coordinate transformation unit 100 receives only coordinate information of a graphic in the vertex information VINF, the image generating unit 300 acquires the vertex information VINF corresponding to the vertex number within the graphic information GINF received from the selection unit 200. Then, the image generating unit 300 performs the geometry processing and the rendering processing using the acquired vertex information VINF and generates the image data GDATA of the divided area DAR. That is, it may also be possible for the image generating unit 300 to acquire the vertex information VINF corresponding to the vertex number within the graphic information GINF received from the selection unit 200 and to generate the image data GDATA based on the acquired vertex information.

The line buffer 400 stores the image data GDATA generated by the image generating unit 300. That is, the line buffer 400 stores the image data GDATA corresponding to one divided area DAR of the divided areas DAR obtained by dividing the two-dimensional display surface DIS. Consequently, in the present embodiment, it is possible to reduce the memory size of the line buffer 400 in comparison with the frame buffer storing data of all the pixels (pixel data) of the two-dimensional display surface DIS.

The line depth buffer 410 stores, for example, the depth (Z value) of a pixel. For example, the image generating unit 300 refers to the setting information, the Z value stored in the line depth buffer 410, and the like, when generating the image data GDATA. The setting information is, for example, a transformation matrix of a graphic, material information such as reflectance, positional information of a light source, and the like. The display circuit 500 sequentially reads the image data GDATA from the line buffer 400 and displays the image on the two-dimensional display surface DIS.

As described above, in the present embodiment, the drawing device 10 has the selection unit 200 outputting the graphic information GINF of a graphic to be drawn in the divided area DAR to the image generating unit 300 for each of the divided areas DAR obtained by dividing the two-dimensional display surface DIS. Because of this, the image generating unit 300 generates the image data GDATA for each divided area DAR. Consequently, in the present embodiment, it is possible to reduce the memory size of the line buffer 400 to the same size as the amount of image data of one divided area DAR. That is, in the present embodiment, it is possible to reduce the memory size of the line buffer 400 in comparison with the frame buffer storing data of all the pixels of the two-dimensional display surface DIS. Furthermore, in the present embodiment, the image data GDATA is generated for each divided area DAR, and therefore, it is possible to reduce the memory size of the line depth buffer 410 in accordance with the line buffer 400. That is, in the present embodiment, it is possible to reduce the memory size of the buffer storing pixel data.

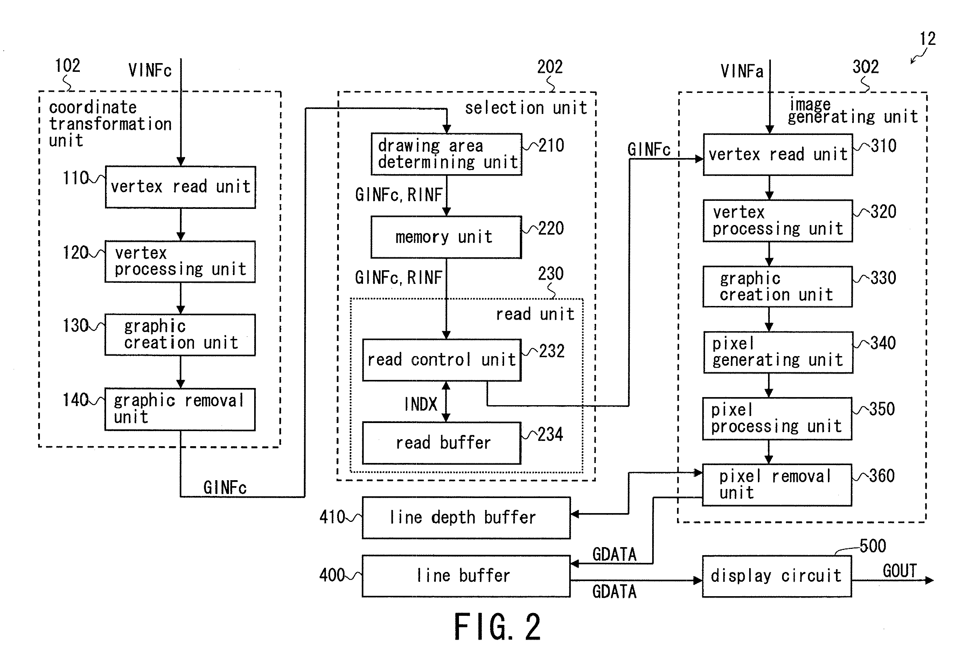

FIG. 2 illustrates an example of a drawing device 12 in another embodiment. The same symbols are attached to the same components as those explained in the above-mentioned embodiment and detailed explanation thereof is omitted. The drawing device 12 displays, for example, a three-dimensional image etc. on the two-dimensional display surface DIS. For example, the drawing device 12 has a coordinate transformation unit 102, a selection unit 202, an image generating unit 302, the line buffer 400, the line depth buffer 410, and the display circuit 500. The coordinate transformation unit 102, the selection unit 202, and the image generating unit 302 correspond to the coordinate transformation unit 100, the selection unit 200, and the image generating unit 300, respectively, illustrated in FIG. 1.

In addition, in FIG. 2, the vertex information VINF is divided into vertex information VINFa and vertex information VINFc for description. For example, the vertex information VINFa has three-dimensional coordinate information of each vertex of a graphic, color information of each vertex, texture coordinate information, normal vector information, etc. Furthermore, for example, the vertex information VINFc is coordinate information of the vertex information VINF. Hereinafter, the vertex information VINFc is also referred to as coordinate information VINFc.

The coordinate transformation unit 102 performs, for example, a part of geometry processing. For example, the coordinate transformation unit 102 reads the coordinate information VINFc of a graphic in the vertex information VINF and performs processing relating to coordinates. That is, the coordinate transformation unit 102 may skip processing of reading information about color, normal line, etc., other than the vertex information VINFc of the graphic. Furthermore, the coordinate transformation unit 102 may skip processing relating to parameters (for example, color and normal line) other than coordinates.

For example, the coordinate transformation unit 102 receives the coordinate information VINFc of a graphic as the vertex information VINF and generates, based on the coordinate information VINFc, graphic information GINFc including at least the vertex number and positional information (coordinates on the two-dimensional display surface DIS of the graphic) of the graphic. The coordinate transformation unit 102 has, for example, a vertex read unit 110, a vertex processing unit 120, a graphic creation unit 130, and a graphic removal unit 140.

The vertex read unit 110 receives the coordinate information VINFc of a graphic in the vertex information VINF and outputs the coordinate information VINFc to the vertex processing unit 120. For example, the vertex read unit 110 reads the coordinate information VINFc from a memory etc. in which the vertex information VINF is stored and outputs the read coordinate information VINFc to the vertex processing unit 120.

The vertex processing unit 120 performs vertex processing relating to coordinates such as rotation based on the coordinate information VINFc. The result of the vertex processing is input to the graphic creation unit 130. The graphic creation unit 130 converts the result of the vertex processing by the vertex processing unit 120 into graphic information. For example, when the graphic is a triangle, the graphic creation unit 130 receives information of three vertexes (vertexes of the triangle) as the result of the vertex processing and converts the result of the vertex processing into information of the triangle. Because of this, the graphic information of the graphic corresponding to the coordinate information VINFc is generated.

The graphic removal unit 140 removes graphic information of a graphic not drawn on the two-dimensional display surface DIS from the graphic information generated by the graphic creation unit 130. For example, the graphic removal unit 140 performs clipping processing and culling processing of removing unnecessary graphic information. For example, by the clipping processing, the graphic removal unit 140 removes a graphic outside the display area. In addition, by the culling processing, for example, the graphic removal unit 140 makes a front and back determination of a graphic and removes a graphic determined to be the back surface. Furthermore, at the time of the setting to display the back surface of a graphic, the graphic removal unit 140 adds front and back information indicative of the back surface such as a flag to the graphic information.

Then, the graphic removal unit 140 outputs graphic information GINFc of a graphic to be drawn on the two-dimensional display surface DIS to a drawing area determining unit 210 of the selection unit 202. The graphic information GINFc has, for example, vertex numbers of the graphic, positional information indicative of coordinates on the two-dimensional display surface DIS of the graphic, and front and back information of the graphic.

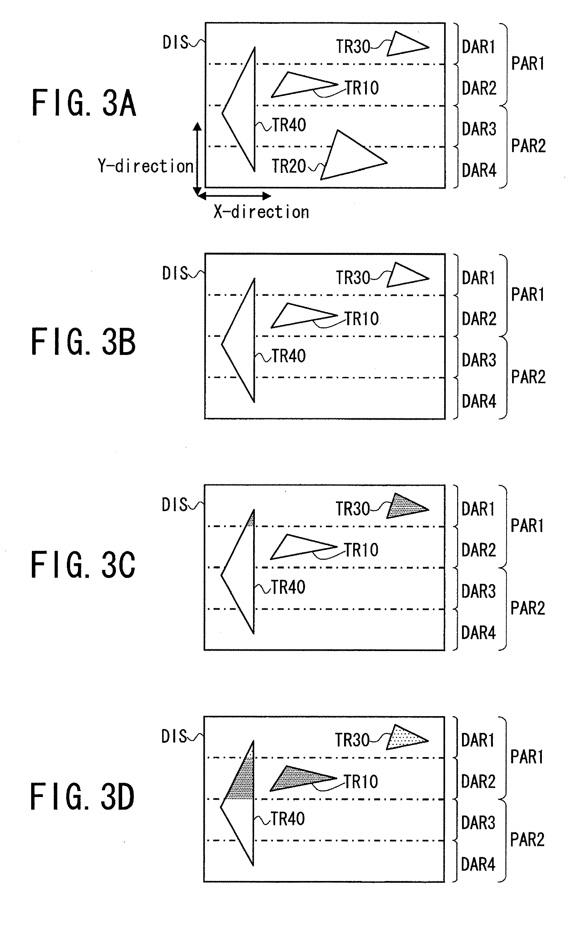

The selection unit 202 has the drawing area determining unit 210, a memory unit 220, and a read unit 230. The drawing area determining unit 210 calculates a drawing range RINF in a predetermined direction (for example, in the Y-direction of FIGs. 3A to 3D) of a graphic based on the graphic information GINFc. For example, the drawing area determining unit 210 calculates a minimum Y-coordinate and a maximum Y-coordinate of the vertexes of a graphic as the drawing range RINF. Then, the drawing area determining unit 210 determines, for each predetermined area, whether or not a graphic is drawn in a predetermined area based on the drawing range RINF of the graphic. Hereinafter, a predetermined area corresponding to a unit of determination processing by the drawing area determining unit 210 is also referred to as a processing area. For example, the processing area is an area (for example, each processing area PAR of FIGs. 3A to 3D) having a plurality of divided areas DAR obtained by dividing the two-dimensional display surface DIS.

For example, the drawing area determining unit 210 determines that a graphic is drawn in a processing area when the next equation (1) is satisfied. Meanwhile, Ymin and Ymax in the equation (1) are the minimum Y-coordinate and the maximum Y-coordinate of the graphic of determination target, and Amin and Amax are the minimum Y-coordinate and the maximum Y-coordinate of the processing area of determination target.

$$(Amin < Ymax) \,\&\&\, (Amax > Ymin) \cdots (1)$$

That is, the drawing area determining unit 210 determines that the graphic is drawn in the processing area when the minimum Y-coordinate Amin of the processing area of determination target is smaller than the maximum Y-coordinate Ymax of the graphic of determination target, and when the maximum Y-coordinate Amax of the processing area of determination target is larger than the minimum Y-coordinate Ymin of the graphic of the determination target.

The drawing area determining unit 210 removes the graphic information GINFc of a graphic not drawn in the processing area (in the examples of FIGs. 3A to 3D, processing area PAR1), in the graphic information GINFc received from the graphic removal unit 140. Then, the drawing area determining unit 210 outputs the graphic information GINFc of the graphic to be drawn in the processing area, to the memory unit 220. Furthermore, the drawing area determining unit 210 outputs the drawing range RINF of the graphic to be drawn in the processing area, to the memory unit 220, by associating the drawing range RINF with the graphic information GINFc.

The memory unit 220 stores the graphic information GINFc and the drawing range RINF output from the drawing area determining unit 210. That is, the memory unit 220 stores the graphic information GINFc and the drawing range RINF of the graphic to be drawn in the processing area.

The read unit 230 determines whether or not a graphic is drawn in the divided area DAR based on the drawing range RINF. Then, the read unit 230 transfers, for each divided area DAR, the graphic information GINFc of the graphic to be drawn in the divided area DAR from the memory unit 220, to the image generating unit 302. For example, the read unit 230 has a read control unit 232 and a read buffer 234.

The read control unit 232 first performs processing of calculating the divided area DAR in which a graphic is drawn, on for all the graphics to be drawn in the processing area. For example, the read control unit 232 substitutes the minimum Y-coordinate and the maximum Y-coordinate of each divided area DAR for Amin and Amax of the equation (1) and determines whether or not the equation (1) is satisfied. Because of this, the divided area DAR in which a graphic is drawn is calculated. The calculation result is stored in the read buffer 234 for each divided area DAR. For example, the read control unit 232 stores, for each divided area DAR, an index INDX indicative of a graphic to be drawn in the divided area DAR in the read buffer 234. The index INDX is, for example, an address etc. of the memory unit 220 in which the graphic information GINFc of the graphic to be drawn in the divided area DAR is stored.

For example, the read control unit 232 reads the graphic information GINFc stored in the memory unit 220 for each divided area DAR based on the index INDX stored in the read buffer 234. Then, the read control unit 232 outputs the read graphic information GINFc to a vertex read unit 310 of the image generating unit 302. Furthermore, the read control unit 232 outputs information indicative of the divided area DAR in which drawing is performed (for example, information indicative of a range in the Y-direction of the divided area DAR), to the image generating unit 302.

As described above, after performing the processing of calculating the divided area DAR in which a graphic is drawn, on all the graphics to be drawn in the processing area, the read unit 230 transfers, for each divided area DAR, the graphic information GINFc of a graphic to be drawn in the divided area DAR from the memory unit 220 to the image generating unit 302.

The image generating unit 302 acquires, for example, the vertex information VINFa corresponding to the vertex number within the graphic information VINFc received from the selection unit 202 and performs the geometry processing and the rendering processing for each divided area DAR. For example, the image generating unit 302 has the vertex read unit 310, a vertex processing unit 320, a graphic creation unit 330, a pixel generating unit 340, a pixel processing unit 350, and a pixel removal unit 360.

The vertex read unit 310 receives the graphic information GINFc from the read control unit 232. Then, the vertex read unit 310 reads the vertex information VINFa corresponding to the vertex number within the graphic information GINFc, from the memory etc. in which the vertex information VINFa is stored. The vertex information VINFa read by the vertex read unit 310 has, for example, coordinate information of the three-dimensional coordinates of each vertex of a graphic, color information of each vertex, texture coordinate information, normal vector information, etc. The vertex read unit 310 outputs the read vertex information VINFa to the vertex processing unit 320.

The vertex processing unit 320 performs vertex processing based on the vertex information VINFa. The vertex processing performed by the vertex processing unit 320 includes, for example, processing relating to coordinates such as rotation, lighting, calculation of color of each vertex, calculation of texture coordinates, calculation of normal vector of each vertex, etc. The result of the vertex processing is input to the graphic creation unit 330. The graphic creation unit 330 converts the result of the vertex processing by the vertex processing unit 320 into graphic information. In the examples of FIGs. 3A to 3D, the graphic creation unit 330 receives information of three vertexes (vertexes of a triangle) as the result of the vertex processing and converts the result of the vertex processing into information of the triangle. Because of this, the graphic information of the graphic to be drawn in the divided area DAR is generated. The graphic creation unit 330 outputs the graphic information to the pixel generating unit 340.

The graphic information output from the graphic creation unit 330 has, for example, positional information of the graphic (coordinates on the two-dimensional display surface DIS), information of equation of each side of the graphic, color information, texture coordinate information, normal vector information, Z-direction information (depth information), etc.

The pixel generating unit 340 generates pixel information based on the graphic information received from the graphic creation unit 330. Then, the pixel generating unit 340 outputs the pixel information to the pixel processing unit 350. The pixel processing unit 350 makes calculation of color, calculation of texture coordinates, etc., in units of pixels based on the pixel information received from the pixel generating unit 340. For example, the pixel processing unit 350 or the like refers to the setting information etc. about the divided area DAR when generating the pixel information of the divided area DAR. The setting information is, for example, a transformation matrix of the graphic, material information such as reflectance, positional information of a light source, etc.

The pixel removal unit 360 removes the pixel information not drawn on the two-dimensional display surface DIS of the pixel information processed by the pixel processing unit 350. For example, the pixel removal unit 360 performs the Z test based on the Z value (depth of a pixel) stored in the line depth buffer 410 and removes unnecessary pixel information. The pixel information left without being removed corresponds to the image data GDATA of the divided area DAR of drawing target. The pixel removal unit 360 stores the image data GDATA of the divided area DAR in the line buffer 400.

As described above, the image generating unit 302 generates the image data GDATA for each divided area DAR. Because of this, the line buffer 400 stores the image data GDATA corresponding to one divided area DAR of the divided areas DAR obtained by dividing the two-dimensional display surface DIS. Consequently, in the present embodiment, it is possible to reduce the memory size of the line buffer 400 in comparison with the frame buffer storing data (image data) of all the pixels of the two-dimensional display surface DIS. The display circuit 500 sequentially reads the image data GDATA from the line buffer 400 and displays the image on the two-dimensional display surface DIS.

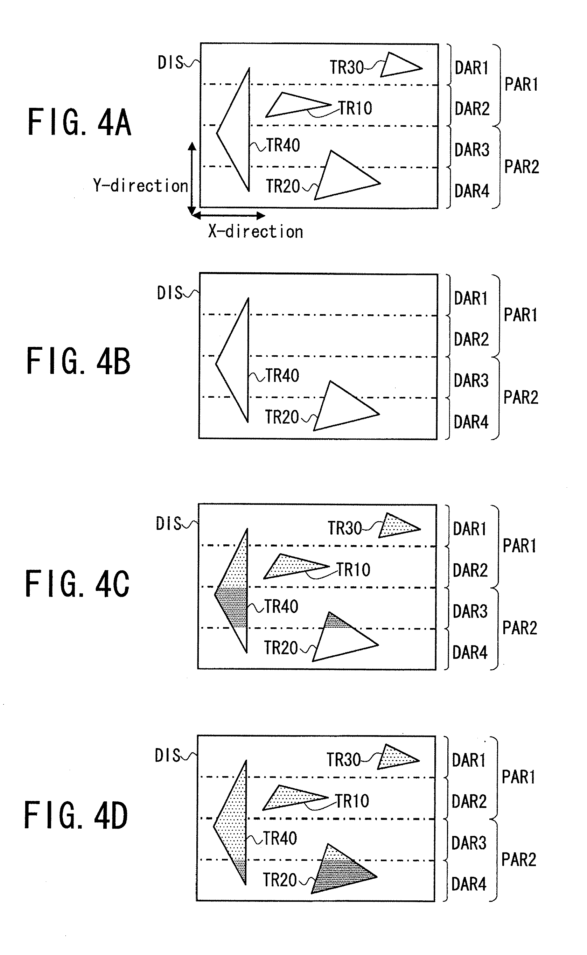

FIGs. 3A to 3D and FIGs. 4A to 4D illustrate examples of the operation of the drawing device 12 illustrated in FIG. 2. FIGs. 3A to 3D and FIGs. 4A to 4D illustrate examples of the operation when the vertex information VINFc is read for each of the processing areas PAR in which the two-dimensional display surface DIS is divided into two in the Y-direction. The processing area PAR1 has the divided areas DAR1 and DAR2 and a processing area PAR2 has the divided areas DAR3 and DAR 4.

For example, FIGs. 3A to 3D illustrate the operation of the drawing device 12 when drawing a graphic in the divided areas DAR1 and DAR2 of the processing area PAR1. Then, FIGs. 4A to 4D illustrate the operation of the drawing device 12 when drawing a graphic in the divided areas DAR3 and DAR4 of the processing area PAR2. The hatched parts of FIGs. 3C to 3D and FIGs. 4C to 4D illustrate parts in which graphics are drawn. The relatively lightly hatched parts illustrate parts drawn before the deeply hatched parts are drawn.

In the examples of FIGs. 3A to 3D and FIGs. 4A to 4D, the vertex information VINF of a triangle TR is read in order of triangles TR10, TR20, TR30, and TR40. For example, in a drawing device that generates image data of the two-dimensional display surface DIS without dividing the image data, the triangle TR is drawn on the two-dimensional display surface DIS in order of the triangles TR10, TR20, TR30, and TR40.

First, as illustrated in FIG. 3A, the coordinate transformation unit 102 generates the graphic information GINFc of the triangles TR10, TR20, TR30, and TR40 to be drawn on the two-dimensional display surface DIS. For example, the vertex read unit 110 reads the vertex information VINFc of the triangles TR10, TR20, TR30, and TR40. Then, the vertex processing unit 120 performs vertex processing relating to coordinates such as rotation based on the vertex information VINFc of the triangles TR10, TR20, TR30, and TR40.

The graphic creation unit 130 receives information of the three vertexes (vertexes of the triangle) from the vertex processing unit 120 as the result of the vertex processing and converts the result of the vertex processing into information (graphic information GINFc) of the triangles TR10, TR20, TR30, and TR40. The graphic information GINFc has, for example, vertex numbers of the triangles TR10, TR20, TR30, and TR40, positional information of the triangles TR10, TR20, TR30, and TR40 (coordinates on the two-dimensional display surface DIS), and front and back information of the graphic. The graphic removal unit 140 performs clipping processing and culling processing, to remove the unnecessary graphic information GINFc.

Then, as illustrated in FIG. 3B, the drawing area determining unit 210 stores in the memory unit 220, the graphic information of the triangles TR10, TR30, and TR40 to be drawn in the processing area PAR1, in the graphic information GINFc received from the graphic removal unit 140. For example, by substituting the minimum Y-coordinate and the maximum Y-coordinate of the processing area PAR1 for Amin and Amax of the equation (1) and by substituting the minimum Y-coordinate and the maximum Y-coordinate of the triangle TR10 for Ymin and Y max, it is determined whether or not the triangle TR10 is drawn in the processing area PAR1.

Next, as illustrated in FIG. 3C, a part of the triangle TR30 and a part of the triangle TR40 (deeply hatched part) are drawn in the divided area DAR1. For example, the read control unit 232 of the read unit 230 stores the index INDX indicative of the triangles TR30 and TR40 to be drawn in the divided area DAR1 in the space for the divided area DAR1 of the read buffer 234. Furthermore, the read control unit 232 stores the index INDX indicative of the triangles TR10 and TR40 to be drawn in the divided area DAR2 in the space for the divided area DAR2 of the read buffer 234.

Then, after storing the index INDX in the read buffer 234 for each of the divided areas DAR1 and DAR2, the read control unit 232 transfers the graphic information GINFc of the triangles TR30 and TR40 to be drawn in the divided area DAR1, from the memory unit 220 to the image generating unit 302. The vertex read unit 310 of the image generating unit 302 reads the vertex information VINFa corresponding to the vertex number within the graphic information GINFc. Then, by the vertex processing unit 320 and the graphic creation unit 330, the graphic information of the triangles TR30 and TR40 to be drawn in the divided area DAR1 is generated.

The pixel generating unit 340 generates pixel information based on the graphic information received from the graphic creation unit 330. The pixel processing unit 350 performs calculation of color, calculation of texture coordinates, etc., in units of pixels based on the pixel information received from the pixel generating unit 340. The pixel removal unit 360 performs, for example, the Z test based on the Z value (depth of a pixel) stored in the line depth buffer 410, to remove unnecessary pixel information. Then, the pixel removal unit 360 stores the image data GDATA of the divided area DAR1 in the line buffer 400. The display circuit 500 reads the image data GDATA from the line buffer 400 and displays the image in the divided area DAR1 of the two-dimensional display surface DIS.

After the image is displayed in the divided area DAR1, as illustrated in FIG. 3D, the triangle TR10 and a part of the triangle TR40 (deeply hatched part) are drawn in the divided area DAR2. For example, the read control unit 232 transfers the graphic information GINFc of the triangles TR10 and TR40 to be drawn in the divided area DAR2 from the memory unit 220 to the image generating unit 302 based on the index INDX stored in the space for the divided area DAR2 of the read buffer 234. Then, the image generating unit 302 generates the image data of the divided area DAR2 of the two-dimensional display surface DIS based on the graphic information GINFc of the triangles TR10 and TR40 received from the read control unit 232. Because of this, the image is displayed in the divided area DAR2 of the two-dimensional display surface DIS.

Next, as illustrated in FIG. 4A, the coordinate transformation unit 102 regenerates the graphic information GINFc of the triangles TR10, TR20, TR30, and TR40 to be drawn on the two-dimensional display surface DIS. For example, the vertex read unit 110 reads again the vertex information VINFc of the triangles TR10, TR20, TR30, and TR40. Then, by the vertex processing unit 120, the graphic creation unit 130, and the graphic removal unit 140, the graphic information GINFc of the triangles TR10, TR20, TR30, and TR40 to be drawn on the two-dimensional display surface DIS is regenerated.

Then, as illustrated in FIG. 4B, the drawing area determining unit 210 stores in the memory unit 220, the graphic information of the triangles TR20 and TR40 to be drawn in the processing area PAR2 of the graphic information GINFc received from the graphic removal unit 140.

Next, as illustrated in FIG. 4C, a part of the triangle TR20 (deeply hatched part) and a part of the triangle TR40 (deeply hatched part) are drawn in the divided area DAR3. For example, the read control unit 232 stores the index INDX indicative of the triangles TR20 and TR40 to be drawn in the divided area DAR3 in the space for the divided area DAR3 of the read buffer 234. Moreover, the read control unit 232 stores the index INDX indicative of the triangles TR20 and TR40 to be drawn in the divided area DAR4 in the space for the divided area DAR4 of the read buffer 234. The space for each divided area DAR of the read buffer 234 may be fixed or may be set as a variable space.

Furthermore, for example, the combined use of the spaces for the divided areas DAR1 and DAR3 of the read buffer 234 may be made. Similarly, the combined use of the spaces for the divided areas DAR2 and DAR4 of the read buffer 234 may be made. The read control unit 232 transfers the graphic information GINFc of the triangles TR20 and TR40 to be drawn in the divided area DAR3 from the memory unit 220 to the image generating unit 302 based on the index INDX stored in the space for the divided area DAR3 of the read buffer 234. Then, the image generating unit 302 generates the image data of the divided area DAR3 of the two-dimensional display surface DIS based on the graphic information GINFc of the triangles TR20 and TR40 received from the read control unit 232.

After the image is displayed in the divided area DAR3, as illustrated in FIG. 4D, a part of the triangle TR20 (deeply hatched part) and a part of the triangle TR40 (deeply hatched part) are drawn in the divided area DAR4. Because of this, the drawing of the entire screen of the two-dimensional display surface DIS is completed. As described above, the coordinate transformation unit 102 repeats the processing of outputting the graphic information GINFc to the drawing area determining unit 210 until all the processing areas PAR1 and PAR2 are determined by the drawing area determining unit 210.

The configuration and operation of the drawing device 12 are not limited to this example. For example, in place of the index INDX, the graphic information GINFc may be stored in the read buffer 234. At this time, the read control unit 232 transfers the graphic information GINFc of a graphic to be drawn in the divided area DAR, from the read buffer 234 to the image generating unit 302.

Furthermore, for example, when the processing area PAR agrees with the divided area DAR, the memory unit 220 and the read unit 230 of the selection unit 202 may be omitted. At this time, instead of storing, for each processing area PAR, the graphic information GINFc in the memory unit 220, the drawing area determining unit 210 outputs the graphic information GINFc to the image generating unit 302 for each processing area PAR (divided area DAR).

Alternatively, when the entire screen of the two-dimensional display surface DIS is one processing area PAR, the drawing area determining unit 210 of the selection unit 202 may be omitted. At this time, the graphic information GINFc of a graphic to be drawn on the two-dimensional display surface DIS is stored in the memory unit 220. Then, the drawing range RINF in a predetermined direction (for example, in the Y-direction of FIGs. 3A to 3D) of the graphic is calculated by the read control unit 232.

As described above, in the present embodiment also, it is possible to obtain the same effect as that of the above-described embodiment. Note that in the present embodiment, the graphic information GINFc to be stored in the memory unit 220 is generated by the vertex processing relating to coordinates. That is, the graphic information GINFc does not include the result of the vertex processing relating to the parameters (for example, color and normal line) other than coordinates. Because of this, in the present embodiment, it is possible to suppress an increase in the memory size of the memory unit 220.

Moreover, in the present embodiment, the coordinate transformation unit 102 generates the graphic information GINFc without dividing a graphic. Here, for example, when the graphic information GINFc is generated after dividing the triangle TR40 into four areas in accordance with the divided area DAR, the amount of data of the graphic information GINFc of the triangle TR40 is about four times the amount of data when generating the graphic information GINFc without dividing the graphic. In each processing area PAR, the amount of data of the graphic information GINFc of the triangle TR40 is about twice the amount of data when generating the graphic information GINFc without dividing the graphic. In contrast to this, in the present embodiment, the graphic information GINFc to be stored in the memory unit 220 is generated without dividing the graphic. Because of this, in the present embodiment, it is possible to suppress an increase in the memory size of the memory unit 220.

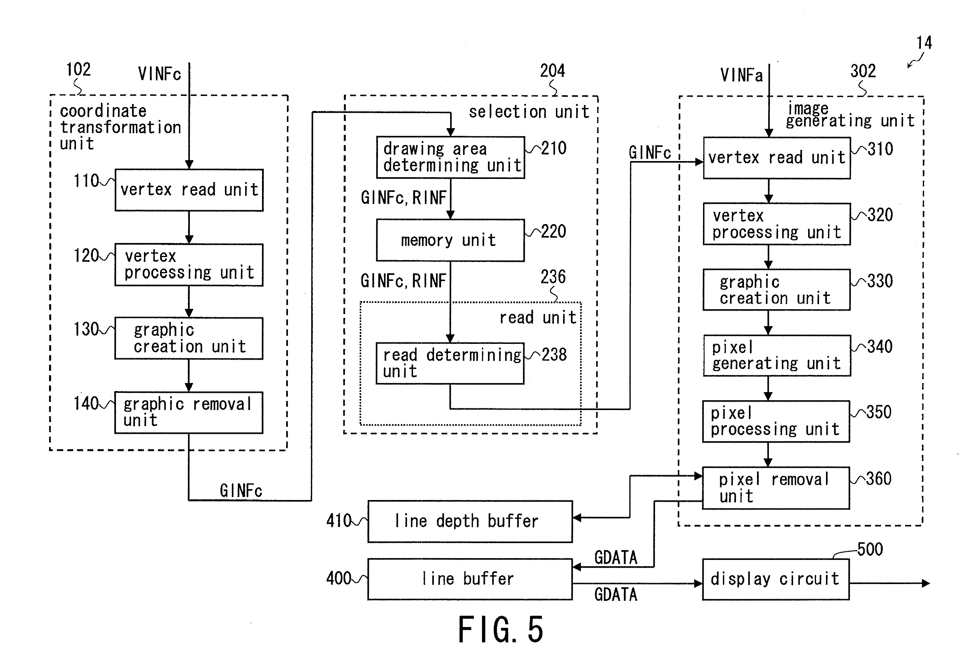

FIG. 5 illustrates an example of a drawing device 14 in another embodiment. The same symbols are attached to the same components as those explained in the above-described embodiments and detailed explanation thereof is omitted. The drawing device 14 has a read unit 236 in place of the read unit 230 illustrated in FIG. 2. Other configurations of the drawing device 14 are the same as those of the embodiment explained in FIG. 2 to FIGs. 4A to 4D. For example, the drawing device 14 displays a three-dimensional image etc. on the two-dimensional display surface DIS.

The drawing device 14 has, for example, the coordinate transformation unit 102, a selection unit 204, the image generating unit 302, the line buffer 400, the line depth buffer 410, and the display circuit 500. The coordinate transformation unit 102, the selection unit 204, and the image generating unit 302 correspond to the coordinate transformation unit 100, the selection unit 200, and the image generating unit 300, respectively, illustrated in FIG. 1.

The selection unit 204 has the read unit 236 in place of the read unit 230 illustrated in FIG. 2. Other configurations of the selection unit 204 are the same as those of the selection unit 202 illustrated in FIG. 2. For example, the selection unit 204 has the drawing area determining unit 210, the memory unit 220, and the read unit 236. The read unit 236 has a read determining unit 238.

The read determining unit 238 determines, for all the graphics to be drawn in the processing area PAR, whether or not a graphic is drawn in the divided area DAR for each divided area DAR. Then, the read determining unit 238 transfers the graphic information GINFc of a graphic to be drawn in the divided area DAR, from the memory unit 220 to the vertex read unit 310 of the image generating unit 302.

For example, in the operation illustrated in FIGs. 3A to 3D, the read determining unit 238 first determines, based on the drawing range RINF of the triangle TR10, whether or not the triangle TR10 is drawn in the divided area DAR1. Since the triangle TR10 is not drawn in the divided area DAR1, the graphic information GINFc of the triangle TR10 is not transferred to the image generating unit 302. Next, the read determining unit 238 determines whether or not the triangle TR30 is drawn in the divided area DAR1 based on the drawing range RINF of the triangle TR30. Since the triangle TR30 is drawn in the divided area DAR1, the read determining unit 238 transfers the graphic information GINFc of the triangle TR30 from the memory unit 220 to the image generating unit 302.

Then, the read determining unit 238 determines whether or not the triangle TR40 is drawn in the divided area DAR1 based on the drawing range RINF of the triangle TR40. Because the triangle TR40 is drawn in the divided area DAR1, the read determining unit 238 transfers the graphic information GINFc of the triangle TR40 from the memory unit 220 to the image generating unit 302. Also when transferring the graphic information GINFc of a graphic to be drawn in the divided area DAR2 to the image generating unit 302, the read determining unit 238 determines whether or not each of the triangles TR10, TR30, and TR40 is drawn in the divided area DAR2.

Furthermore, for example, in the operation illustrated in FIGs. 4A to 4D, when transferring the graphic information GINFc of a graphic to be drawn in the divided area DAR3 to the image generating unit 302, the read determining unit 238 determines whether or not each of the triangles TR20 and TR40 is drawn in the divided area DAR3. Then, when transferring the graphic information GINFc of a graphic to be drawn in the divided area DAR4 to the image generating unit 302, the read determining unit 238 also determines whether or not each of the triangles TR20 and TR40 is drawn in the divided area DAR4.

In this way, the read unit 236 determines whether or not a graphic is drawn in the divided area DAR based on the drawing range RINF and transfers the graphic information GINFc of the graphic to be drawn in the divided area DAR from the memory unit 220 to the image generating unit 302 for each divided area DAR.

The configuration and operation of the drawing device 14 are not limited to this example. For example, when the entire screen of the two-dimensional display surface DIS is one processing area PAR, the drawing area determining unit 210 of the selection unit 204 may be omitted. At this time, the graphic information GINFc of a graphic to be drawn on the two-dimensional display surface DIS is stored in the memory unit 220. Then, the drawing range RINF in a predetermined direction (for example, in the Y-direction of FIGs. 3A to 3D) of a graphic is calculated by the read determining unit 238.

As described above, in the present embodiment also, it is possible to obtain the same effect as that of the above-described embodiments.

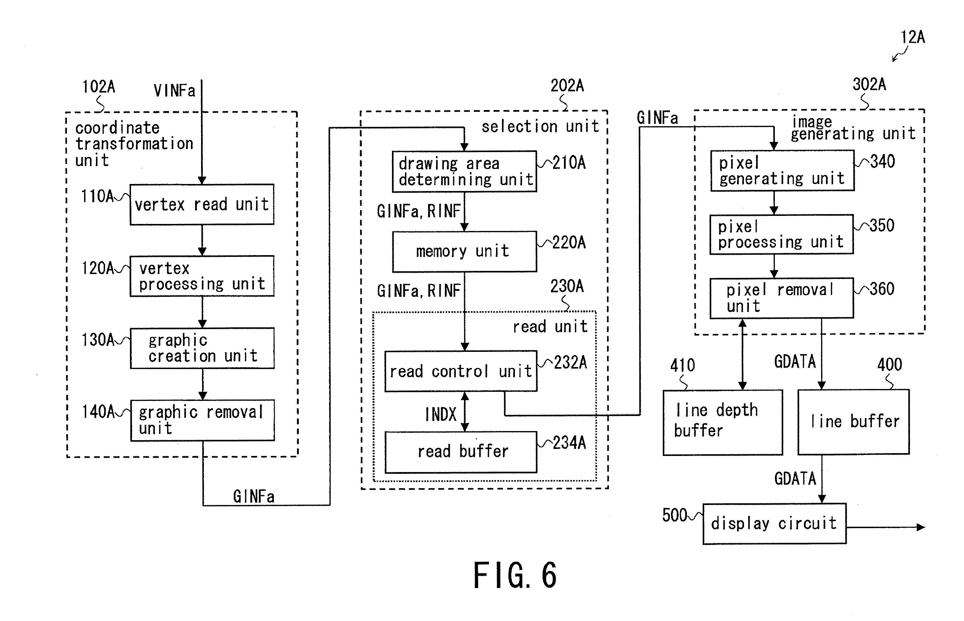

FIG. 6 illustrates an example of a drawing device 12A in another embodiment. The same symbols are attached to the same components as the components explained in the above-described embodiments and detailed explanation thereof is omitted. The drawing device 12A has a coordinate transformation unit 102A, a selection unit 202A, and an image generating unit 302A in place of the coordinate transformation unit 102, the selection unit 202, and the image generating unit 302 illustrated in FIG. 2. Other configurations of the drawing device 12A are the same as those of the above-described embodiments explained in FIG. 2 to FIGs. 4A to 4D. For example, the drawing device 12A displays a three-dimensional image etc. on the two-dimensional display surface DIS.

The drawing device 12A has, for example, the coordinate transformation unit 102A, the selection unit 202A, the image generating unit 302A, the line buffer 400, the line depth buffer 410, and the display circuit 500. The coordinate transformation unit 102A, the selection unit 202A, and the image generating unit 302A correspond to the coordinate transformation unit 100, the selection unit 200, and the image generating unit 300, respectively, illustrated in FIG. 1.

The coordinate transformation unit 102A generates graphic information GINFa including information necessary to generate the image data GDATA based on the vertex information VINFa. For example, the coordinate transformation unit 102A performs geometry processing. The configuration and operation of the coordinate transformation unit 102A are the same as those of the coordinate transformation unit 102 illustrated in FIG. 2 except that processing relating to parameters (for example, color and normal line) other than coordinates is performed. The coordinate transformation unit 102A has, for example, a vertex read unit 110A, a vertex processing unit 120A, a graphic creation unit 130A, and a graphic removal unit 140A.

The vertex read unit 110A reads the vertex information VINFa from, for example, a memory etc. in which the vertex information VINFa is stored and outputs the read vertex information VINFa to the vertex processing unit 120A. The vertex information VINFa read by the vertex read unit 110A has, for example, coordinate information of the three-dimensional coordinates of each vertex of a graphic, color information of each vertex, texture coordinate information, normal vector information, etc.

The vertex processing unit 120A performs vertex processing based on the vertex information VINFa. The vertex processing performed by the vertex processing unit 120A includes, for example, processing relating to coordinates such as rotation, lighting, calculation of color of each vertex, calculation of texture coordinates, calculation of the normal vector of each vertex, etc. The result of the vertex processing is input to the graphic creation unit 130A. The graphic creation unit 130A transforms the result of the vertex processing by the vertex processing unit 120A into graphic information. In the examples of FIGs. 3A to 3D, the graphic creation unit 130A receives the information of three vertexes (vertexes of the triangle) as the result of the vertex processing and transforms the result of the vertex processing into information of the triangle. Because of this, graphic information of the graphic corresponding to the vertex information VINFa is generated. The graphic creation unit 130A outputs the graphic information to the graphic removal unit 140A.

The graphic removal unit 140A removes the graphic information of a graphic not drawn on the two-dimensional display surface DIS of the graphic information generated by the graphic creation unit 130A. For example, the graphic removal unit 140A performs clipping processing and culling processing of removing unnecessary graphic information. Then, the graphic removal unit 140A outputs the graphic information GINFa of a graphic to be drawn on the two-dimensional display surface DIS, to a drawing area determining unit 210A of the selection unit 202A. The graphic information GINFa output from the graphic removal unit 140A has, for example, positional information of the graphic (coordinates on the two-dimensional display surface DIS), information of the equation of each side of the graphic, color information, texture coordinate information, normal vector information, Z-direction information (depth information), etc.

The selection unit 202A has the drawing area determining unit 210A, a memory unit 220A, and a read unit 230A. The configuration and operation of the selection unit 202A are the same as those of the selection unit 202 illustrated in FIG. 2 except that in place of the graphic information GINFc, the graphic information GINFa is referred to. For example, the drawing area determining unit 210A calculates, based on the graphic information GINFa, the drawing range RINF in a predetermined direction (for example, in the Y-direction of FIGs. 3A to 3D) of a graphic. Then, the drawing area determining unit 210A determines, for example, whether or not the above-described equation (1) is satisfied and outputs the graphic information GINFa and the drawing range RINF of the graphic to be drawn in the processing area PAR, to the memory unit 220A. That is, the drawing area determining unit 210A removes the graphic information GINFa of the graphic not drawn in the processing area PAR of determination target in the graphic information GINFa received from the graphic removal unit 140A.

The memory unit 220A stores the graphic information GINFa, the drawing range RINF, etc., output from the drawing area determining unit 210A. For example, the memory unit 220A stores the graphic information GINFa of a graphic to be drawn in the processing area PAR, the drawing range RINF, and the setting information about the processing area PAR.

**[0081]** The read unit 230A determines whether or not a graphic is drawn in the divided area DAR based on the drawing range RINF. Then, the read unit 230A transfers, for each divided area DAR, the graphic information GINFa of a graphic to be drawn in the divided area DAR, from the memory unit 220A to the image generating unit 302A. For example, the read unit 230A has a read control unit 232A and a read buffer 234A.

The read control unit 232A first performs processing of calculating the divided area DAR in which a graphic is drawn, on all the graphics to be drawn in the processing area PAR. The calculation result is stored in the read buffer 234A for each divided area DAR. For example, the read control unit 232A stores, for each divided area DAR, the index INDX indicative of the graphic to be drawn in the divided area DAR in the read buffer 234A. After that, the read control unit 232A reads the graphic information GINFa stored in the memory unit 220A for each divided area DAR based on the index INDX stored in the read buffer 234A.

Then, the read control unit 232A outputs the read graphic information GINFa to the pixel generating unit 340 of the image generating unit 302A. Furthermore, the read control unit 232A outputs information indicative of the divided area DAR in which drawing is performed (for example, information indicative of the range in the Y-direction of the divided area DAR), to the image generating unit 302A.

In this way, after performing the processing of calculating the divided area DAR in which a graphic is drawn, on all the graphics to be drawn in the processing area PAR, the read unit 230A transfers, for each divided area DAR, the graphic information GINFa of a graphic to be drawn in the divided area DAR from the memory unit 220A to the image generating unit 302A.

The image generating unit 302A has the pixel generating unit 340, the pixel processing unit 350, and the pixel removal unit 360. That is, the configuration and operation of the pixel generating unit 340, the pixel processing unit 350, and the pixel removal unit 360 are the same as those of the pixel generating unit 340, the pixel processing unit 350, and the pixel removal unit 360 of the image generating unit 302 illustrated in FIG. 2. For example, the pixel generating unit 340 generates pixel information based on the graphic information GINFa received from the read unit 230A. Then, by the pixel processing unit 350 and the pixel removal unit 360, the image data GDATA of the divided area DAR of drawing target is generated. The pixel removal unit 360 stores the image data GDATA of the divided area DAR in the line buffer 400.

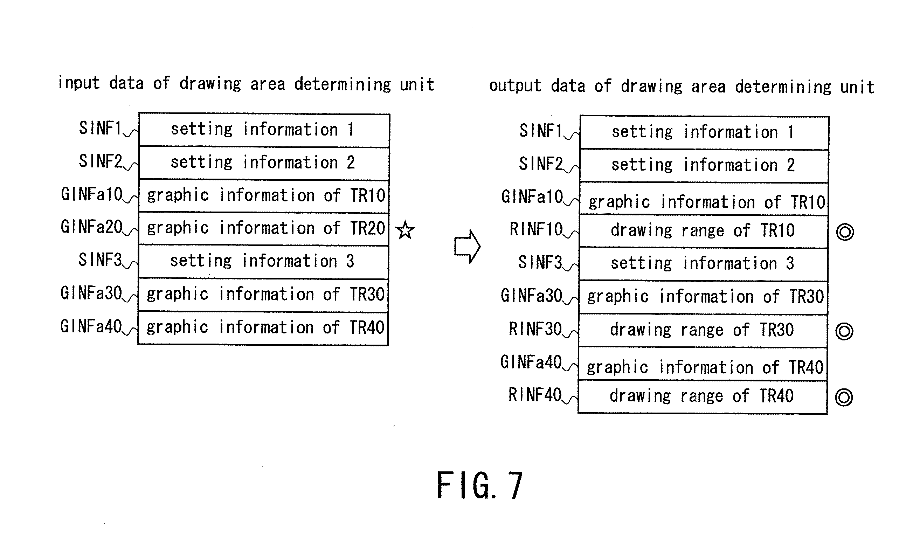

FIG. 7 illustrates an example of input and output data of the drawing area determining unit 210A illustrated in FIG. 6. Note that FIG. 7 illustrates an example of input and output data of the drawing area determining unit 210A when the operation corresponding to the operation illustrated in FIGs. 3A to 3D is performed. The star mark in FIG. 7 indicates the graphic information GINFa to be removed by the drawing area determining unit 210A and the double circle indicates the drawing range RINF to be added by the drawing area determining unit 210A.

For example, the drawing area determining unit 210A sequentially receives setting information SINF1 and SINF2, graphic information GINFa10 of the triangle TR10, graphic information GINFa20 of the triangle TR20, setting information SINF3, graphic information GINFa30 of the triangle TR30, and graphic information GINFa40 of the triangle TR40, from the coordinate transformation unit 102A. The setting information SINF is, for example, a transformation matrix of a graphic, material information such as reflectance, positional information of a light source, etc.

Then, the drawing area determining unit 210A sequentially outputs the setting information SINF1 and SINF2, the graphic information GINFa10, a drawing range RINF10, the setting information SINF3, the graphic information GINFa30, a drawing range RINF30, the graphic information GINFa40, and a drawing range RINF40, to the memory unit 220A. To the data output from the drawing area determining unit 210A, the drawing ranges RINF10, RINF30, and RINF40 of the triangles TR10, TR30, and TR40 to be drawn in the processing area PAR1 of determination target are added. The graphic information GINFa20 of the triangle TR20 not drawn in the processing area PAR1 is not output to the memory unit 220A.

The configuration and operation of the drawing device 12A are not limited to this example. For example, in the read buffer 234A, the graphic information GINFa may be stored in place of the index INDX. At this time, the read control unit 232A transfers the graphic information GINFa of a graphic to be drawn in the divided area DAR, from the read buffer 234A to the image generating unit 302A.

Furthermore, for example, when the processing area PAR agrees with the divided area DAR, the memory unit 220A and the read unit 230A of the selection unit 202A may be omitted. At this time, the drawing area determining unit 210A outputs the graphic information GINFa to the image generating unit 302A for each processing area PAR (divided area DAR) instead of storing the graphic information GINFa in the memory unit 220A for each processing area PAR.

**[0091]** Alternatively, when the entire screen of the two-dimensional display surface DIS is one processing area PAR, the drawing area determining unit 210A of the selection unit 202A may be omitted. At this time, the graphic information GINFa of a graphic to be drawn on the two-dimensional display surface DIS is stored in the memory unit 220A. Then, the drawing range RINF in a predetermined direction (for example, in the Y-direction of FIGs. 3A to 3D) of a graphic is calculated by the read control unit 232A.

As described above, in the present embodiment also, it is possible to obtain the same effect as that of the above-described embodiments.

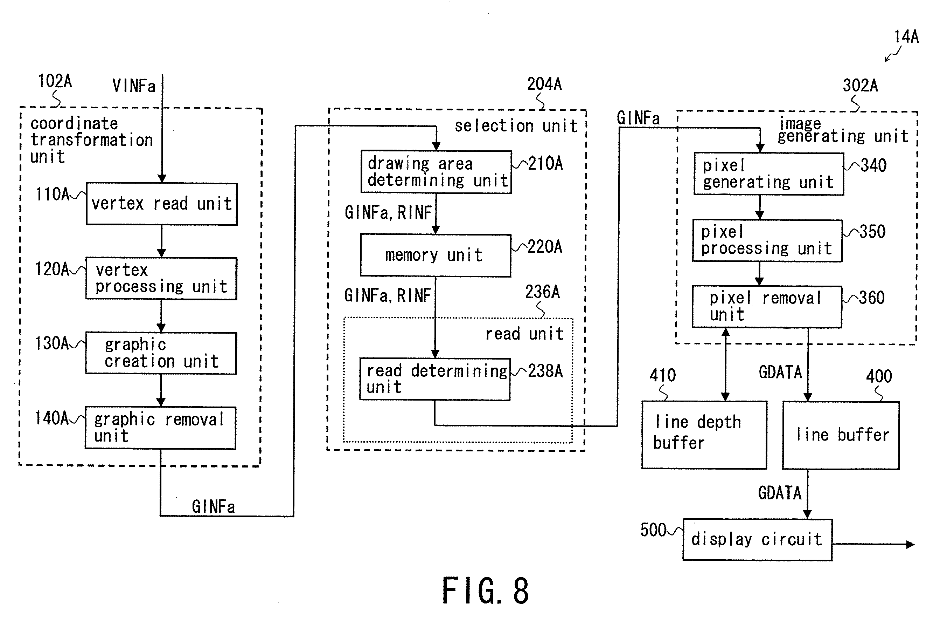

FIG. 8 illustrates an example of a drawing device 14A in another embodiment. The same symbols are attached to the same components as those explained in the above-described embodiments and detail explanation thereof is omitted. The drawing device 14A has a read unit 236A in place of the read unit 230A illustrated in FIG. 6. Other configurations of the drawing device 14A are the same as those of the embodiment explained in FIG. 6 and FIG. 7 described above. For example, the drawing device 14A displays a three-dimensional image etc. on the two-dimensional display surface DIS.

The drawing device 14A has, for example, the coordinate transformation unit 102A, a selection unit 204A, the image generating unit 302A, the line buffer 400, the line depth buffer 410, and the display circuit 500. The coordinate transformation unit 102A, the selection unit 204A, and the image generating unit 302A correspond to the coordinate transformation unit 100, the selection unit 200, and the image generating unit 300, respectively, illustrated in FIG. 1.

The selection unit 204A has the read unit 236A in place of the read unit 230A illustrated in FIG. 6. Other configurations of the selection unit 204A are the same as those of the selection unit 202A illustrated in FIG. 6. For example, the selection unit 204A has the drawing area determining unit 210A, the memory unit 220A, and the read unit 236A. The read unit 236A has a read determining unit 238A. The configuration and operation of the read determining unit 238A are the same as those of the read determining unit 238 illustrated in FIG. 5 except that in place of the graphic information GINFc, the graphic information GINFa is referred to.

For example, the read determining unit 238A determines, for each divided area DAR, whether or not a graphic is drawn in the divided area DAR for all the graphics to be drawn in the processing area PAR. Then, the read determining unit 238A transfers the graphic information GINFa of a graphic to be drawn in the divided area DAR, from the memory unit 220A to the pixel generating unit 340 of the image generating unit 302A.

The configuration and operation of the drawing device 14A are not limited to this example. For example, when the entire screen of the two-dimensional display surface DIS is one processing area PAR, the drawing area determining unit 210A of the selection unit 204A may be omitted. At this time, the graphic information GINFa of a graphic to be drawn on the two-dimensional display surface DIS is stored in the memory unit 220A. Then, the drawing range RINF in a predetermined direction (for example, in the Y-direction of FIGs. 3A to 3D) of a graphic is calculated by the read determining unit 238A.

As described above, also in the present embodiment, it is possible to obtain the same effect as that of the above-described embodiments.

**Claims**

1.  A drawing device comprising:

    a coordinate transformation unit receiving vertex information of a graphic and generating graphic information including at least positional information indicative of coordinates on a two-dimensional display surface of the graphic based on the vertex information;
    a selection unit receiving the graphic information from the coordinate transformation unit, calculating a drawing range in a predetermined direction of the graphic based on the graphic information, and outputting the graphic information of the graphic to be drawn in divided areas for each of the divided areas obtained by dividing the two-dimensional display surface;
an image generating unit generating image data of the divided areas based on the graphic information output from the selection unit; and
a line buffer storing the image data generated by the image generating unit.

2. The drawing device according to claim 1, wherein:

the selection unit includes:

a drawing area determining unit calculating the drawing range of the graphic and determining, for each processing area including a plurality of the divided areas, whether or not the graphic is to be drawn in the processing area based on the drawing range of the graphic;
a memory unit storing the graphic information and the drawing range of the graphic to be drawn in the processing area; and
a read unit determining whether or not the graphic is to be drawn in each of the divided areas based on the drawing range and transferring, for each of the divided areas, the graphic information of the graphic to be drawn in the divided areas from the memory unit to the image generating unit; and

the coordinate transformation unit repeats processing of outputting the graphic information to the drawing area determining unit until the determination by the drawing area determining unit is conducted on every processing area.

3. The drawing device according to claim 2, wherein:

the coordinate transformation unit receives coordinate information of the graphic as the vertex information and generates the graphic information including at least vertex numbers and the positional information of the graphic based on the coordinate information;
the read unit transfers, for each of the divided area, the graphic information of the graphic to be drawn in the divided areas from the memory unit to the image generating unit after performing processing of calculating each of the divided areas in which the graphic is to be drawn on every graphic to be drawn in the processing area; and
the image generating unit acquires the vertex information corresponding to the vertex numbers in the graphic information received from the read unit and generates the image data based on the vertex information being acquired.

4. The drawing device according to claim 2, wherein:

the coordinate transformation unit receives coordinate information of the graphic as the vertex information and generates the graphic information including at least vertex numbers and the positional information of the graphic based on the coordinate information;
the read unit conducts the determination whether or not the graphic is to be drawn in the divided areas on every graphic to be drawn in the processing area and transfers the graphic information of the graphic to be drawn in the divided areas from the memory unit to the image generating unit for each of the divided areas; and
the image generating unit acquires the vertex information corresponding to the vertex numbers in the graphic information received from the read unit and generates the image data based on the vertex information being acquired.

5. The drawing device according to claim 2, wherein:

the coordinate transformation unit generates the graphic information including information necessary to generate the image data based on the vertex information;
the read unit transfers, for each of the divided areas, the graphic information of the graphic to be drawn in the divided areas from the memory unit to the image generating unit after performing processing of calculating each of the divided areas in which the graphic is to be drawn on every graphic to be drawn in the processing area; and
the image generating unit generates the image data based on the graphic information received from the read unit.

6. The drawing device according to claim 2, wherein:

the coordinate transformation unit generates the graphic information including information necessary to generate the image data based on the vertex information:

the read unit conducts the determination whether or not the graphic is to be drawn in the divided areas on every graphic to be drawn in the processing area and transfers the graphic information of the graphic to be drawn in the divided areas from the memory unit to the image generating unit for each of the divided areas and
the image generating unit generates the image data based on the graphic information received from the read unit.

**7.** A drawing program for executing on a computer, which, when executed, causes the computer to perform:

receiving vertex information of a graphic and generating graphic information including at least positional information indicative of coordinates on a two-dimensional display surface of the graphic based on the vertex information;

receiving the graphic information from the coordinate transformation unit, calculating a drawing range in a predetermined direction of the graphic based on the graphic information, and outputting the graphic information of the graphic to be drawn in divided areas for each of the divided areas obtained by dividing the two-dimensional display surface;

generating image data of the divided areas based on the graphic information output from the selection unit; and

storing the image data generated by the image generating unit.

FIG. 1

FIG. 2

**image generating unit** (302, 12)

VINFa →
- vertex read unit (310)
- vertex processing unit (320)
- graphic creation unit (330)
- pixel generating unit (340)
- pixel processing unit (350)
- pixel removal unit (360)

GINFc

**selection unit** (202)
- drawing area determining unit (210)
- GINFc, RINF
- memory unit (220)
- GINFc, RINF
- read unit (230)
  - read control unit (232)
  - INDX
  - read buffer (234)

line depth buffer (410)

line buffer (400)

display circuit (500)

GDATA

GDATA

GOUT

**coordinate transformation unit** (102)

VINFc →
- vertex read unit (110)
- vertex processing unit (120)
- graphic creation unit (130)
- graphic removal unit (140)

GINFc

15

FIG. 3A

FIG. 3B

FIG. 3C

FIG. 3D

FIG. 4A

FIG. 4B

FIG. 4C

FIG. 4D

FIG. 5

FIG. 6

input data of drawing area determining unit

| | |
|---|---|
| SINF1 | setting information 1 |
| SINF2 | setting information 2 |
| GINFa10 | graphic information of TR10 |
| GINFa20 | graphic information of TR20 |
| SINF3 | setting information 3 |
| GINFa30 | graphic information of TR30 |
| GINFa40 | graphic information of TR40 |

☆ ⇨

output data of drawing area determining unit

| | | |
|---|---|---|
| SINF1 | setting information 1 | |
| SINF2 | setting information 2 | |
| GINFa10 | graphic information of TR10 | |
| RINF10 | drawing range of TR10 | ◎ |
| SINF3 | setting information 3 | |
| GINFa30 | graphic information of TR30 | |
| RINF30 | drawing range of TR30 | ◎ |
| GINFa40 | graphic information of TR40 | |
| RINF40 | drawing range of TR40 | ◎ |

FIG. 7

FIG. 8

14A

302A

image generating unit

340 pixel generating unit
350 pixel processing unit
360 pixel removal unit

GINFa

GDATA

400 line buffer

410 line depth buffer

GDATA

500 display circuit

204A selection unit

210A drawing area determining unit
GINFa, RINF
220A memory unit
GINFa, RINF
236A read unit
238A read determining unit

102A coordinate transformation unit
VINFa
110A vertex read unit
120A vertex processing unit
130A graphic creation unit
140A graphic removal unit
GINFa

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11031236 A
- JP 10222695 A
- JP 9180000 A
- JP 2000030081 A